# NOUVEAU FASCICULE DE BREVET EUROPEEN

(11) **EP 1 748 228 B2**
(45) Date de publication et mention de la décision concernant l'opposition: **04.01.2012**
(45) Mention de la délivrance du brevet: 06.08.2008
(21) Numéro de dépôt: 06300589.6
(22) Date de dépôt: 14.06.2006
(51) Int. Cl.: F16H 57/02, F16C 13/04

(54) **Palier pour arbre de boîte de vitesses de véhicule automobile, et boîte de vitesses associée**
Lager einer Getriebewelle eines Kraftfahrzeugetriebes und Schaltgetriebe
Bearing for a transmission shaft of a vehicle gearbox and associated gearbox

(30) Priorité: 28.07.2005 FR 0508051
(43) Date de publication de la demande: 31.01.2007
(73) Titulaire: Renault, 92100 Boulogne Billancourt (FR)
(72) Inventeur: Buannec, Michel, 78480 Verneuil Sur Seine (FR); Cloud, Philippe, 92500 Rueil Malmaison (FR); Francois, Ludovic, 75017 Paris (FR)

(56) Documents cités:
- CA-A1- 1 038 433
- DE-A1- 3 144 585
- DE-A1- 10 027 375
- DE-A1- 10 316 321
- DE-A1- 10 326 866
- DE-A1- 10 343 992
- DE-A1- 19 950 584
- DE-U- 1 814 591
- FR-B1- 2 855 229
- GB-A- 213 987
- US-A- 5 283 621
- US-A1- 2004 060 384

## Description

La présente invention concerne le domaine des boîtes de vitesses pour véhicule automobile selon la revendication 5.

La présente invention concerne plus particulièrement un palier pour arbre de boîte de vitesses de véhicule automobile selon la revendication 1.

Une boîte de vitesses de véhicule automobile est pourvue généralement d'un carter, d'au moins un arbre primaire portant des pignons fixes et relié par un embrayage au moteur du véhicule, et d'au moins un arbre secondaire relié aux roues du véhicule par l'intermédiaire d'un différentiel. L'arbre secondaire comprend des pignons fous engrenant avec les pignons fixes et susceptibles d'être sélectivement liés en rotation avec ledit arbre secondaire, sous l'action de fourchettes de commande.

On connaît, par le document FR-A-2 855 229 de la demanderesse, une boîte de vitesses à arbres parallèles du type comprenant un arbre primaire plein et un arbre primaire creux concentriques, deux arbres secondaires principal et auxiliaire non concentriques, et un arbre de renvoi ou intermédiaire. L'arbre secondaire principal comprend un pignon de descente qui engrène avec une couronne de différentiel, les arbres secondaires étant liés entre eux par ledit arbre de renvoi.

Un tel arbre de renvoi est soumis à des sollicitations statiques mais également des sollicitations dynamiques qui peuvent être relativement importantes, par exemple lors de l'engagement du rapport de marche arrière.

Les sollicitations peuvent générer un fléchissement relativement important de l'arbre, ce qui peut provoquer un mauvais engrènement des pignons de la boîte de vitesses.

La présente invention a donc pour but de remédier à cet inconvénient da manière à accroître la sûreté de fonctionnement de la boîte de vitesses.

A cet effet, l'invention a pour objet un palier pour arbre de boîte de vitesses pour véhicule automobile pourvu d'une portion de support présentant en section droite un profil interne adapté au diamètre de l'arbre, et d'au moins une patte d'immobilisation reliée (fixe sur le carter de la boîte de vitesses) à ladite portion de support et comprenant une surface de contact avec un carter de la boîte de vitesses.

Le palier permet ainsi de réaliser, en addition de paliers conventionnels généralement montés à chaque extrémité de l'arbre, un support intermédiaire pour ledit arbre de manière à limiter un éventuel fléchissement, et ce, de manière efficace et économique.

En outre, dans le cas d'un arbre monté tournant à l'intérieur du carter de la boîte de vitesses, la portion de support peut former chemin de guidage pour ledit arbre.

Préférentiellement, le palier est monobloc, ce qui évite ainsi de réaliser l'assemblage de différentes pièces générant des surcoûts de montage.

Dans un mode de réalisation, le palier comprend deux pattes de d'immobilisation montées chacune au voisinage d'une extrémité de la portion de support.

Avantageusement, la portion de support présente en section droite un profil en arc de cercle centré sur l'axe dudit arbre. Ledit arc de cercle peut s'étendre angulairement entre 90° et 180°, et est de préférence sensiblement égal à 150°.

L'invention a également pour objet une boîte de vitesses pour véhicule automobile pourvue d'un carter, d'arbres parallèles munis d'une pluralité de pignons et comprenant au moins un arbre primaire relié au moteur du véhicule et au moins un arbre secondaire relié aux roues du véhicule, et d'au moins un palier pour un des arbres pourvu d'une portion de support présentant en section droite un profil interne concave adapté au diamètre dudit arbre, et d'au moins une patte de d'immobilisation reliée à ladite portion de support et comprenant une surface de contact avec ledit carter.

Avantageusement, le palier est monté sensiblement au milieu dudit arbre.

Dans un mode de réalisation, le palier est fixé sur le carter.

De préférence, la portion de support laisse subsister un jeu de fonctionnement entre l'arbre et ladite portion de manière à permettre un léger fléchissement de l'arbre.

Un tel jeu de fonctionnement permet de faciliter le montage du palier au niveau du carter.

L'arbre peut être fixe par rapport au carter ou monté à rotation à l'intérieur du carter.

Avantageusement, le palier est fixé sur l'arbre.

Dans un mode de réalisation, la patte de d'immobilisation laisse subsister un jeu de fonctionnement entre le carter de la boîte de vitesses et ladite patte de manière à permettre un léger fléchissement de l'arbre.

La présente invention sera mieux comprise à la lecture de la description détaillée d'un mode de réalisation pris à titre d'exemple nullement limitatif et illustré par les dessins annexés, sur lesquels :
- la figure 1 est une représentation schématique en coupe transversale d'une boîte de vitesses selon l'invention représentant le cheminement du couple selon le rapport de marche arrière,
- la figure 2 est une vue schématique en coupe selon l'axe II-II de la figure 1,
- la figure 3 est une vue schématique en coupe selon l'axe III-III de la figure 2 représentant un palier pour arbre selon l'invention, et
- la figure 4 est une vue partielle en perspective de la figure 3.

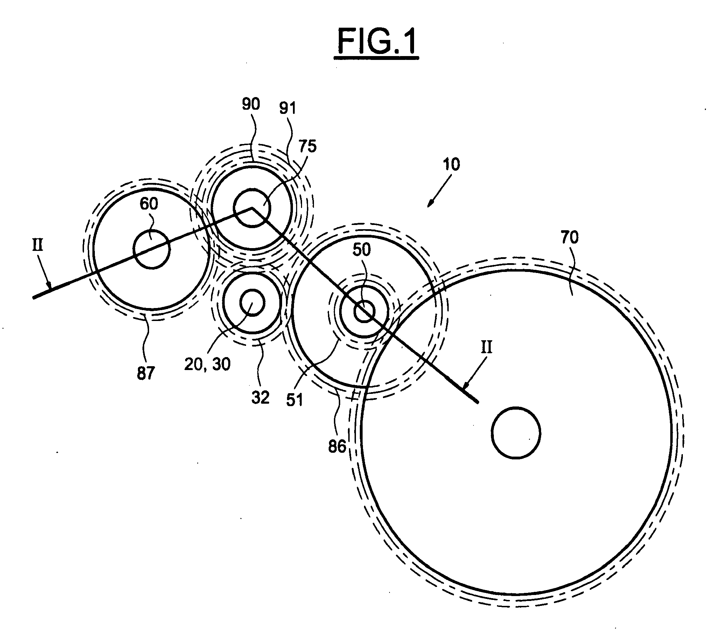

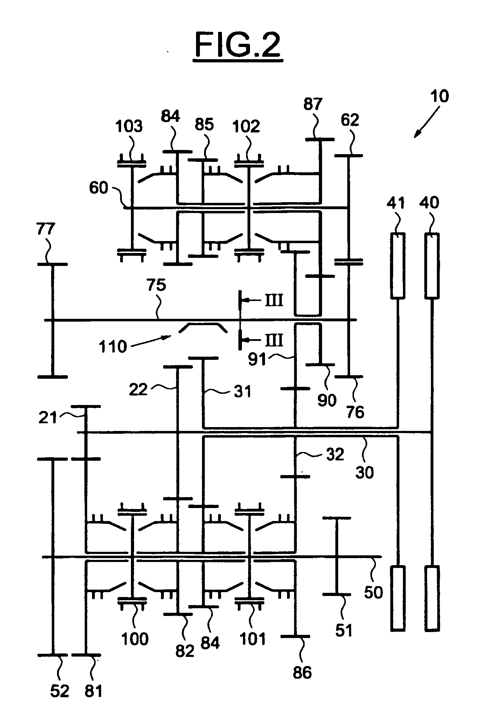

Sur les figures 1 et 2, on a représenté une boîte de vitesses, désignée par la référence numérique générale 10, comprenant à l'intérieur d'un carter (non représenté) un premier arbre primaire plein 20 qui est monté coaxialement à un second arbre primaire creux 30.

Ces deux arbres sont montés à rotation au niveau de leurs extrémités dans le carter de la boîte et entraînés par un moteur respectivement par l'intermédiaire d'un premier embrayage 40 et d'un second embrayage 41, qui sont à titre d'exemple, et de façon non limitative, des embrayages multidisques humides.

La boîte de vitesses 10 comporte également un premier arbre secondaire 50 dit principal et un deuxième arbre secondaire 60 dit auxiliaire, également montés à rotation, à leurs extrémités, dans le carter. Ces arbres secondaires ne sont pas coaxiaux. Les axes des arbres primaires 20, 30 et secondaires 50, 60 définissent ici un triangle, dont l'angle ayant pour sommet l'axe des arbres primaires 20, 30 est un angle obtus ouvert vers le haut.

Des engrenages sont agencés entre les arbres primaires 20 et 30 et les arbres secondaires 50 et 60 de manière à transmettre le couple du véhicule à une couronne 70 d'un différentiel d'un pont (non représenté) entraînant les roues d'un véhicule. A cet effet, seul l'arbre secondaire principal 50 comporte un pignon de descente 51 qui engrène avec la couronne 70 du différentiel et l'arbre secondaire auxiliaire 60 est lié en rotation à l'arbre secondaire 50 par arbre de renvoi 75 portant des pignons fixes 76 et 77 engrenant avec les pignons fixes 52 et 62 portés respectivement par les arbres secondaires 50 et 60.

Les engrenages sont constitués de dentures fixes qui sont portées par le premier et par le second arbres primaires 20 et 30, et qui engrènent avec des pignons fous qui sont portés par les arbres secondaires 50 et 60. Ces pignons fous sont susceptibles d'être sélectivement liés en rotation aux premier et second arbres secondaires 50 et 60 par des moyens de crabotage indépendants pour réaliser des engrenages indépendants correspondant sélectivement à au moins deux rapports de marche avant et un rapport de marche arrière.

Le premier arbre primaire 20 porte ici deux dentures fixes, de gauche à droite, 21 et 22. La première engrène avec un unique pignon fou 81, porté par le premier arbre secondaire 50, pour constituer le rapport de première. La seconde engrène avec un premier pignon fou 82 et un second pignon fou (non représenté) respectivement portés par le premier arbre secondaire 50 pour constituer le rapport de cinquième et par le second arbre secondaire 60 pour constituer le rapport de troisième.

Le second arbre primaire creux 30 porte également deux dentures fixes, de gauche à droite 31 et 32. La première engrène avec deux pignons fous 84 et 85, respectivement portés par le premier arbre secondaire 50 pour constituer le rapport de sixième et par le second arbre secondaire 60 pour constituer le rapport de quatrième. La seconde engrène avec un pignon fou 86 porté par le premier arbre secondaire 50 pour constituer le rapport de deuxième. Le rapport de marche arrière a ici son propre pignon fou 87, porté par le second arbre secondaire 60, qui engrène avec un pignon intermédiaire 90, porté par l'arbre intermédiaire 75, lié en rotation avec le second pignon intermédiaire 91 qui engrène avec la denture fixe 32 de l'arbre primaire 30. Le pignon intermédiaire 91, 90 tourne fou sur l'arbre intermédiaire 75.

Le pignon fou de marche arrière 87, le pignon intermédiaire de marche arrière 90 et les pignons 62 et 76 du renvoi sont disposés dans la même tranche axiale que le pignon d'attaque 51. Ainsi, la boîte de vitesses 10 a le même encombrement axial qu'une boîte à quatre rapports, pour obtenir six rapports de marche avant et un rapport de marche arrière. En d'autres termes, la boîte de vitesses est particulièrement compacte.

La boîte de vitesses 10 comprend également un premier dispositif de crabotage double 100 permettant de lier sélectivement en rotation à l'arbre secondaire 50 le pignon fou 81 pour obtenir le rapport de première ou le pignon fou 82 pour obtenir le rapport de cinquième, un second dispositif de crabotage double 101 permettant de lier en rotation à l'arbre secondaire 50 le pignon fou 84 pour obtenir le rapport de sixième ou le pignon fou 86 pour obtenir le rapport de deuxième, et un troisième dispositif de crabotage double 102 permettant de lier sélectivement en rotation à l'arbre secondaire 60 le pignon fou 85 pour obtenir le rapport de quatrième ou le pignon fou 87 pour obtenir le rapport de marche arrière, enfin un crabot simple 103 permet de lier sélectivement en rotation à l'arbre secondaire 60 le pignon fou 83 pour obtenir le rapport de troisième.

Pour plus de détails sur le fonctionnement de la boîte de vitesses, on pourra se référer à la demande de brevet FR-A-2 855 229 de la demanderesse.

De manière à limiter d'éventuelles déformations de l'arbre de renvoi 75, notamment lors de l'engrènement du rapport de marche arrière, la boîte de vitesses 10 comprend également un palier 110 pour ledit arbre.

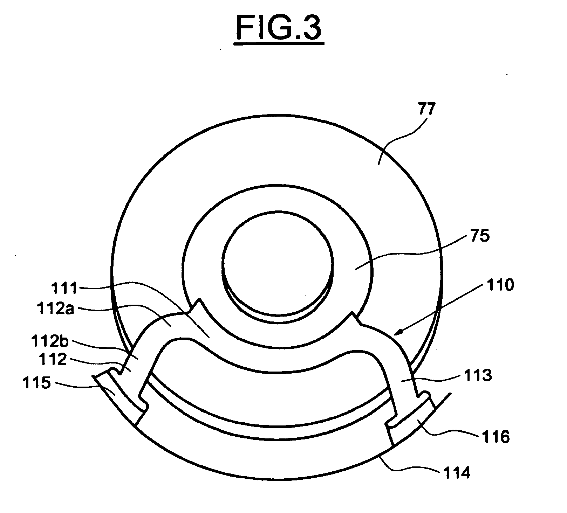

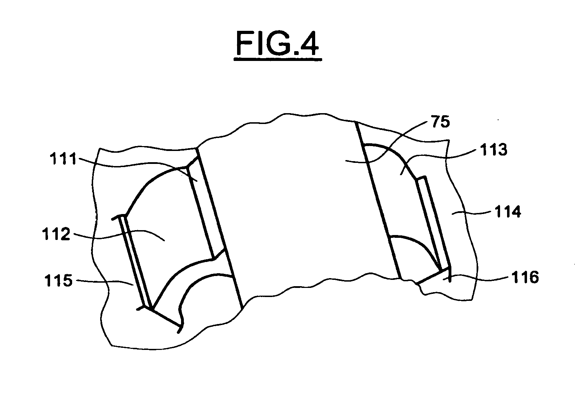

Comme illustré plus visiblement sur les figures 3 et 4, le palier 110, réalisé en une seule pièce, est pourvu d'une portion de support 111, et de pattes 112, 113 d'immobilisation reliées à ladite portion de support.

La portion de support 111 s'étend axialement le long de l'arbre de renvoi 75 et présente, en section droite, un profil interne concave orienté vers le haut. Le profil interne concave est ici réalisé sous la forme d'un arc de cercle centré sur l'axe de l'arbre de renvoi 75 et sensiblement égal à 150°. Bien entendu, il est également envisageable de prévoir un arc de cercle de dimensions différentes, compris de préférence entre 90° et 180°.

En d'autres termes, la portion de support 111 comprend une gorge circulaire orientée en direction de l'arbre de renvoi 75 et dimensionnée en fonction de son diamètre. La portion de support 111 laisse subsister ici un jeu de fonctionnement (non représenté) entre ladite portion et l'arbre de renvoi 75, par exemple de l'ordre de quelque millimètres.

La portion de guidage 111 présente une dimension radiale sensiblement supérieure au diamètre de tête des pignons rapportés sur l'arbre 75 de renvoi, ici les pignons 76, 77, 90 et 91 (figure 2).

Les pattes 112, 113 sont aptes à permettre le maintien en position de le portion de support 111 par rapport à un carter 114 de la boîte de vitesses. Les pattes 112 et 113 sont identiques entre elles et symétriques en considérant un plan médian vertical de l'arbre de renvoi 75. En variante, il est bien entendu également envisageable de prévoir une unique patte montée dans ledit plan médian.

La patte 112 s'étend axialement sur toute la longueur de la portion de support 111. La patte 112 se raccorde au niveau d'une extrémité libre de la portion de support 111 et comprend une partie courbe 112a prolongeant sensiblement vers l'extérieur ladite portion de support, elle-même prolongée par une portion inclinée 112b sensiblement vers le bas en direction du carter 114.

Les extrémités inférieures des pattes 112, 113 sont ici fixées sur le carter 114, par exemple par soudage, au niveau de bossages 115 et 116 du carter 114. Les bossages 115, 116 permettent d'obtenir un appui des pattes 112, 113 sur une surface plane du carter 114. Les pattes 112, 113 forment ici des pattes de fixation du palier 110 sur le carter 114.

En ce qui concerne la portion 111 de support, celle-ci est destinée à supporter l'arbre 75 de renvoi, lors d'un fléchissement dudit arbre. Le palier 110, qui peut avantageusement être réalisé en bronze, permet ainsi d'encaisser une partie des efforts transmis à l'arbre de renvoi 75. Les efforts pouvant être supportés par le palier 110 sont notamment fonction de la longueur de la portion de support 111 et de son épaisseur. Dans ce mode de réalisation, lors du fléchissement dudit arbre 75, la portion de support 111 forme ainsi un chemin de guidage pour ledit arbre.

Le palier 110 constitue donc un support apte à limiter le fléchissement de l'arbre 75 permettant d'accroître la sûreté de fonctionnement de la boîte.

Bien entendu, on conçoit aisément que l'utilisation d'un tel palier n'est pas limitée à la boîte de vitesses décrite et peut s'appliquer également à d'autres types de boîte de vitesses.

Il est par exemple envisageable de prévoir en variante une boîte de vitesses comprenant un arbre de renvoi monté fixe à l'intérieur du carter et sur lequel sont disposés des pignons fous.

Dans cette variante de réalisation, un palier tel que décrit précédemment peut également être avantageusement utilisé. Le palier peut être monté fixe sur le carter, ou encore fixe sur l'arbre. Si l'on rapporte ledit palier sur l'arbre de renvoi, il est possible de laisser un jeu de fonctionnement entre le carter et les pattes du palier de manière à faciliter son montage à l'intérieur de la boîte de vitesses. Lors d'un fléchissement de l'arbre, les pattes viennent alors en contact avec le carter de la boîte et limitent donc le déplacement dudit arbre. Le palier autorise ainsi qu'une flèche limitée de l'arbre.

Dans une variante de réalisation dans laquelle l'arbre de renvoi est monté fixé à l'intérieur du carter de la boîte de vitesses, il est également envisageable de prévoir un palier fixé sur l'arbre et sur le carter.

Bien entendu, la disposition d'un palier au niveau d'un arbre de renvoi n'est nullement limitative, il pourrait également être utilisé pour d'autres arbres de boîte de vitesses.

## Revendications

1. Palier d'arbre de boîte de vitesses pour véhicule automobile, qui est pourvu
- d'une portion de support (111) présentant en section droite un profil interne concave en arc de cercle centré sur l'axe dudit arbre et s'étendant angulairement entre 90° et 180°, le profil étant adapté au diamètre de l'arbre, et
- d'au moins une patte de fixation (112) sur le carter de la boîte de vitesses reliée à ladite portion de support et comprenant une surface de contact (115) avec ce carter,
**caractérisé en ce que** le palier comprend deux pattes de fixation (112, 113) montées chacune au voisinage d'une extrémité de la portion de support.

2. Palier selon la revendication 1, dans lequel il est monobloc.

3. Palier selon l'une quelconque des revendications précédentes, dans lequel la portion de support présente en section droite un profil en arc de cercle centré sur l'axe dudit arbre et s'étendant angulairement sur sensiblement 150°.

4. Boîte de vitesses pour véhicule automobile pourvue d'un carter, d'arbres parallèles munis d'une pluralité de pignons et comprenant au moins un arbre primaire relié au moteur du véhicule et au moins un arbre secondaire relié aux roues du véhicule, et d'au moins un palier (110) pour un des arbres, le palier étant pourvu d'une portion de support (111) présentant en section droite un profil interne concave en arc de cercle centré sur l'axe dudit arbre et s'étendant angulairement entre 90° et 180°, le profil étant adapté au diamètre dudit arbre, et d'au moins une patte de fixation (112) sur le carter de la boîte de vitesses reliée à ladite portion de support et comprenant une surface de contact (115) avec le carter,
**caractérisé en ce que** le palier comprend deux pattes de fixation (112, 113) montées chacune au voisinage d'une extrémité de la portion de support.

5. Boîte de vitesses selon la revendication 4, dans laquelle le palier est monté sensiblement au milieu dudit arbre.

6. Boîte de vitesses selon la revendication 4 ou 5, dans laquelle le palier est fixé sur le carter.

7. Boîte de vitesses selon l'une quelconque des revendications 4 à 6, dans laquelle la portion de support (111) laisse subsister un jeu de fonctionnement entre l'arbre et ladite portion de manière à permettre un léger fléchissement de l'arbre.

8. Boîte de vitesses selon l'une quelconque des revendications 4 à 7, dans laquelle l'arbre est fixe par rapport au carter.

9. Boîte de vitesses selon l'une quelconque des revendications 4 à 8, dans laquelle le palier est fixé sur l'arbre.

10. Boîte de vitesses selon l'une quelconque des revendications 4 à 7, dans laquelle l'arbre est monté à rotation à l'intérieur du carter.

11. Boîte de vitesses selon l'une quelconque des revendications 4 à 10, dans laquelle le palier est monté au niveau d'un arbre de renvoi.

## Claims

1. Bearing for a motor vehicle gearbox shaft, which is provided
- with a support portion (111) having in cross section a concave internal contour which is an arc of a circle centred on the axis of the said shaft and extending angularly between 90° and 180°, the contour being made to fit the diameter of the shaft, and
- with at least one mounting lug (112) on the casing of the gearbox connected to the said support portion and comprising an area of contact (115) with this casing,
**characterized in that** the bearing comprises two mounting lugs (112, 113) each mounted in the vicinity of one end of the support portion.

2. Bearing according to Claim 1, in which it is in one piece.

3. Bearing according to either one of the preceding claims, in which the support portion has in cross section a contour which is an arc of a circle centred on the axis of the said shaft and extending angularly over substantially 150°.

4. Gearbox for a motor vehicle provided with a casing, parallel shafts provided with a series of gears and comprising at least one primary shaft connected to the engine of the vehicle and at least one output shaft connected to the wheels of the vehicle, and at least one bearing (110) for one of the shafts, the bearing being provided with a support portion (111) having in cross section a concave internal contour which is an arc of a circle centred on the axis of the said shaft and extending angularly between 90° and 180°, the contour being made to fit the diameter of the said shaft, and at least one mounting lug (112) on the casing of the gearbox connected to the said support portion and comprising an area of contact (115) with the casing,
**characterized in that** the bearing comprises two mounting lugs (112, 113) each mounted in the vicinity of one end of the support portion.

5. Gearbox according to Claim 4, in which the bearing is mounted generally at the mid-point of the said shaft.

6. Gearbox according to Claim 4 or 5, in which the bearing is fastened to the casing.

7. Gearbox according to any one of Claims 4 to 6, in which the support portion (111) leaves an operating clearance between the shaft and the said portion so as to allow a slight flexing of the shaft.

8. Gearbox according to any one of Claims 4 to 7, in which the shaft is fixed in relation to the casing.

9. Gearbox according to any one of Claims 4 to 8, in which the bearing is fastened to the shaft.

10. Gearbox according to any one of Claims 4 to 7, in which the shaft is mounted such that it can rotate inside the casing.

11. Gearbox according to any one of Claims 4 to 10, in which the bearing is mounted near a countershaft.

## Patentansprüche

1. Wellenlager für Kraftfahrzeugschaltgetriebe, das
- mit einem Unterstützungsabschnitt (111), der im Querschnitt ein auf die Achse der Welle zentriertes inneres konkaves Kreisbogenprofil aufweist, das sich über einen Winkel im Bereich von 90° bis 180° erstreckt, wobei das Profil an den Durchmesser der Welle angepasst wird, und
- mit wenigstens einem Ansatz (112) für die Befestigung am Gehäuse des Schaltgetriebes, der mit dem Unterstützungsabschnitt verbunden ist und eine Fläche (115) für den Kontakt mit diesem Gehäuse aufweist, versehen ist,
**dadurch gekennzeichnet, dass** das Lager zwei Befestigungsansätze (112, 113) aufweist, die jeweils in der Umgebung eines Endes des Unterstützungsabschnitts angebracht sind.

2. Lager nach Anspruch 1, das aus einem einzigen Block gebildet ist.

3. Lager nach einem der vorhergehenden Ansprüche, wobei der Unterstützungsabschnitt im Querschnitt ein auf die Achse der Welle zentriertes Kreisbogenprofil aufweist, das sich über einen Winkel von ungefähr 150° erstreckt.

4. Schaltgetriebe für Kraftfahrzeug, das mit einem Gehäuse, parallelen Wellen, die mit mehreren Zapfen versehen sind und wenigstens eine primäre Welle, die mit dem Motor des Fahrzeugs verbunden ist, und wenigstens eine sekundäre Welle, die mit den Rädern des Fahrzeugs verbunden ist, enthalten, und mit wenigstens einem Lager (110) für eine der Wellen versehen ist, wobei das Lager mit einem Unterstützungsabschnitt (111), der im Querschnitt ein auf die Achse der Welle zentriertes inneres konkaves Kreisbogenprofil aufweist, das sich über einen Winkel im Bereich von 90° bis 180° erstreckt, wobei das Profil an den Durchmesser der Welle angepasst wird, und mit wenigstens einem Ansatz (112) für die Befestigung am Gehäuse des Schaltgetriebes, der mit dem Unterstützungsabschnitt verbunden ist und eine Oberfläche (115) für einen Kontakt mit dem Gehäuse aufweist, versehen ist,
**dadurch gekennzeichnet, dass** das Lager zwei Befestigungsansätze (112, 113) aufweist, die jeweils in der Umgebung eines Endes des Unterstützungsabschnitts angebracht sind.

5. Schaltgetriebe nach Anspruch 4, wobei das Lager im Wesentlichen in der Mitte der Welle angebracht ist.

6. Schaltgetriebe nach Anspruch 4 oder 5, wobei das Lager an dem Gehäuse befestigt ist.

7. Schaltgetriebe nach einem der Ansprüche 4 bis 6, wobei der Unterstützungsabschnitt (111) zwischen der Welle und dem Abschnitt ein Arbeitsspiel bestehen lässt, derart, dass eine leichte Biegung der Welle möglich ist.

8. Schaltgetriebe nach einem der Ansprüche 4 bis 7, wobei die Welle in Bezug auf das Gehäuse fest ist.

9. Schaltgetriebe nach einem der Ansprüche 4 bis 8, wobei das Lager an der Welle befestigt ist.

10. Schaltgetriebe nach einem der Ansprüche 4 bis 7, wobei die Welle innerhalb des Gehäuses drehbar angebracht ist.

11. Schaltgetriebe nach einem der Ansprüche 4 bis 10, wobei die Welle auf Höhe einer Zwischenwelle angebracht ist.
